# EUROPEAN PATENT SPECIFICATION

(11) **EP 3 174 080 B1**
(45) Date of publication and mention of the grant of the patent: **28.11.2018**
(21) Application number: 14898885.0
(22) Date of filing: 26.07.2014
(51) Int. Cl.: H01H 13/06, H01H 13/14, H04M 1/18

(54) **WATERPROOF STRUCTURE FOR BUTTON ON ELECTRONIC PRODUCT AND WATERPROOF MOBILE PHONE USING SAME**
WASSERDICHTE STRUKTUR FÜR KNOPF AN EINEM ELEKTRONISCHEN PRODUKT UND WASSERDICHTES MOBILTELEFON DAMIT
STRUCTURE RÉSISTANT À L'EAU POUR BOUTON SUR PRODUIT ÉLECTRONIQUE, ET TÉLÉPHONE MOBILE RÉSISTANT À L'EAU L'UTILISANT

(43) Date of publication of application: 31.05.2017
(73) Proprietor: Power Idea Technology (Shenzhen) Co., Ltd., Shenzhen, Guangdong 518057 (CN)
(72) Inventor: CHEN, Fanguo, Shenzhen Guangdong 518057 (CN); CHEN, Dongming, Shenzhen Guangdong 518057 (CN)
(74) Representative: CMS Cameron McKenna Nabarro Olswang LLP
(86) International application number: PCT/CN2014/083098
(87) International publication number: WO 2016/015184

(56) References cited:
- CN-A- 102 610 418
- CN-A- 102 751 123
- CN-A- 102 760 599
- CN-A- 102 881 498
- CN-A- 103 280 357
- CN-U- 202 816 745
- JP-A- 2013 114 767
- US-A1- 2014 085 781

## Description

### FIELD

The subject matter herein generally relates to a waterproof structure for a button of an outdoor electronic device, and a waterproof mobile phone using the same.

### BACKGROUND

The outdoor electronic products need to adapt to a variety of complex environment of the outdoor, so on a base of keeping a fine usage function, a special requirement that the outdoor electronic products fit with the outdoor environment, such as waterproofing, is proposed. Prior art examples are disclosed by CN102760599, CN102751123 and US2014/085781.

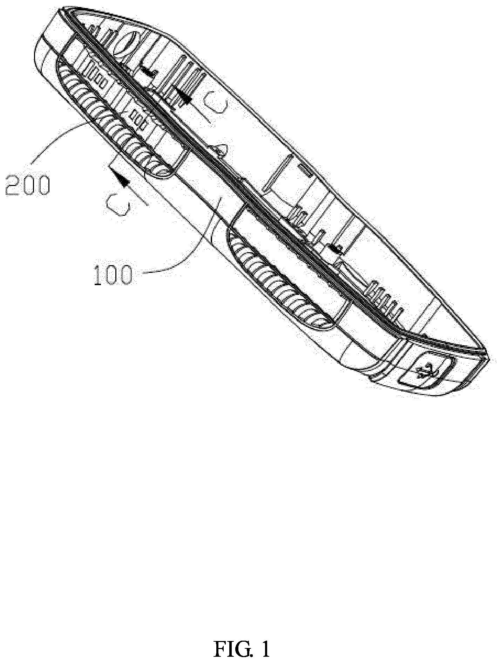

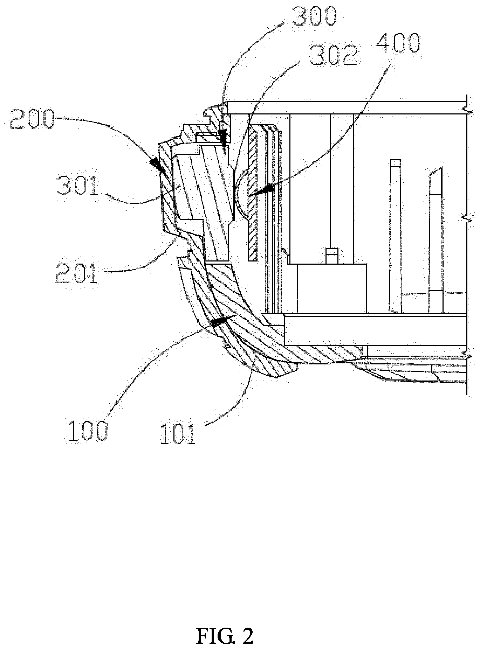

A button arranged on a sidewall of an outdoor mobile phone for waterproofing is taken as an example, referring to FIG. 1 and FIG. 2, the waterproof structure includes a casing 100, a button 200, a silicone member 300, and a button switch 400. The casing is a double-color molded article. An outer surface of the casing is a soft rubber layer 101. The material of the button 200 is the same as the material of the soft rubber layer 101. The button 200 and the soft rubber layer 101 are a whole structure, and the button 200 and the casing 100 are wholly formed, thus the sealing and waterproofing of the button 200 can be assured. The button 200 protrudes out of a surface of the soft rubber layer 101. The protrusion portion of the button 200 is an arch structure 201. A protruding height that the arch structure 201 protrudes from the soft rubber layer 101 provides an elastic trip for the pressure of the button 200. Consider that the button 200 is a mobile phone appearance member, thus the protruding height cannot be set to be too high, otherwise the whole appearance of the product will be influenced. The silicone member 300 is assembled to the casing 1. A protrusion 301 is provided on a side of the silicone member 300 facing the button 200. The protrusion 301 contacts the arch structure 201. The silicone member 300 is provided with a convex hull 302 at another side opposite to the protrusion 301. The button switch 400 is assembled and fixed to the casing 1, and faces the convex hull 302. The button switch 400 and the convex hull 302 press against each other. Press the button 200, because of the soft material of the arch structure 201 and a certain elastic trip for the arch shape of the arch structure 201, a deformed is generated when being pressed, the deformed is further acted on the silicone member 300, causing the silicone member generating a displacement at the direction of the force, thus the button switch is conducted and connected and a corresponding function is generated. In the aforementioned button waterproof structure, because of a limit of the height that the arch structure 201 protrudes from the soft rubber layer 101, thus only a small trip is provided, not only the button provides a bad feel, but also a problem that the button 200 cannot be conducted for the insufficiency of the elastic trip is existed. Moreover, because that the button 200 and the soft rubber layer 101 are a whole structure, and the button 200 and the casing 100 are integrated, thus the button 200 needs to be consist with the soft rubber layer 101 in the material and color, therefore the color of the outer surface of the product is single, lacking design flexibility.

### SUMMARY OF THE INVENTION

The problem to be solved by the present disclosure is to provide a button waterproof structure. The structure can resolve the problem in the related art that a bad feel of the button and the function being not conducted because of the insufficiency trip of the button are brought by the insufficiency of the elastic length because of the limited wholly formed between the button and the casing.

A waterproof structure for a button comprises a casing, a button, and an elastic member. The elastic member is arranged on the casing. The button is movably coupled to the casing and contacts the elastic member. The elastic member and the casing are integrated. The elastic member includes a tubular structure. An elastic wall is arranged on the tubular structure. The elastic wall is an arch structure. The elastic wall protrudes towards interior of the tubular structure.

A waterproof mobile phone that using this type of design button is presented.

The present disclosure brings about the following beneficial effects: in the button waterproof structure of the present disclosure, the elastic member is arranged on the casing and is integrated with the casing. A reliable waterproof of the button is ensured. Simultaneously, an elastic wall which is an arch structure is arranged on the elastic member. The arch height of the arch structure provides an elastic trip for the pressure of the button. Because the elastic member is a built-in component of the product. Thus, the arch height of the arch structure can be flexibly varied and adjusted according to the actual needs, and accordingly provides sufficiently necessary trip for the conductive of the button function, therefore, a problem that the button function cannot be realized caused by the insufficiency of the elastic trip, simultaneously a problem that a bad feel of the button caused by the insufficiency of the button elastic trip in the related art.

Moreover, the button is a sole component, the material and the color of the button can be flexibly adjusted according to the customer requirement and the product requirement, the flexibility of the entire design of the product is improved.

### BRIEF DESCRIPTION OF THE DRAWINGS

Implementations of the present technology will now be described, by way of example only, with reference to the attached figures, wherein:
FIG. 1 illustrates an assembly view of the button waterproof structure of the related art.
FIT. 2 illustrates an enlarged and cross-section view taken along line C-C of FIG. 1.
FIG. 3 illustrates an exploded view of an embodiment of a waterproof mobile phone.
FIG. 4 illustrates an enlarged view of a portion "R" of FIG. 3.
FIG. 5 illustrates an enlarged and cross-section view taken along line A-A of FIG. 3.
FIG. 6 illustrates an assembly view of an embodiment of the waterproof mobile phone.
FIG. 7 illustrates an enlarged view of a portion "T" of FIG. 6.
FIG. 8 illustrates an enlarged and cross-section view taken along line B-B of FIG. 6.

### DETAILED DESCRIPTION

The present disclosure and mobile phone are to be understood in conjunction with the accompanying drawings and specific embodiments herein.

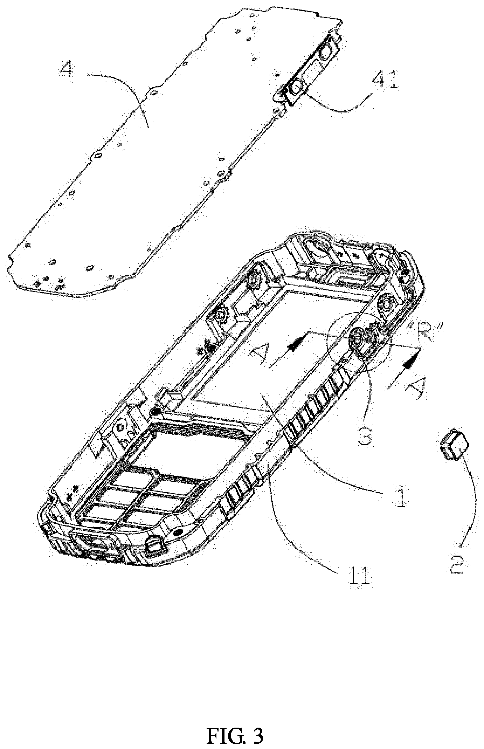

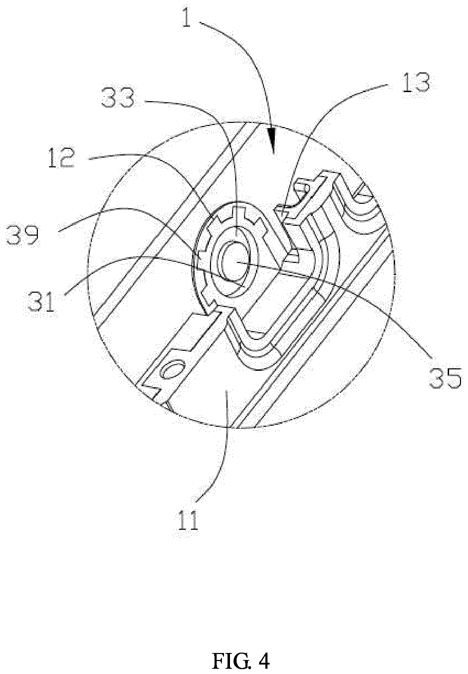

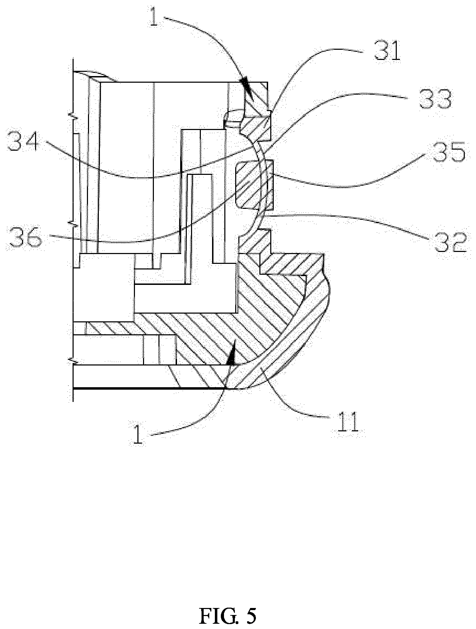

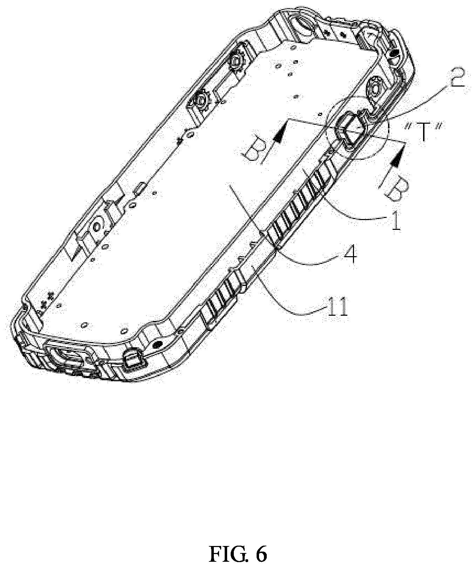

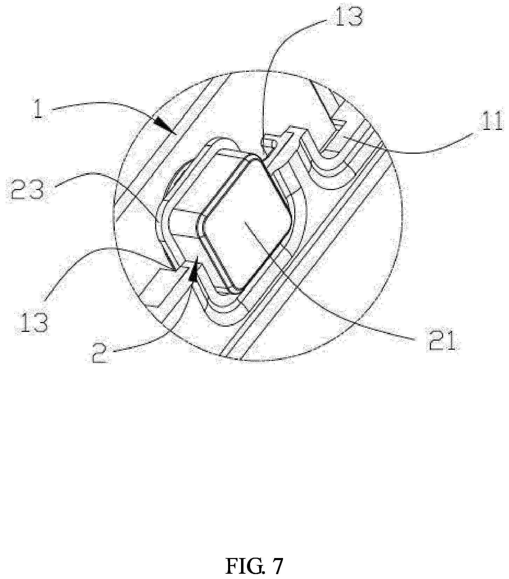

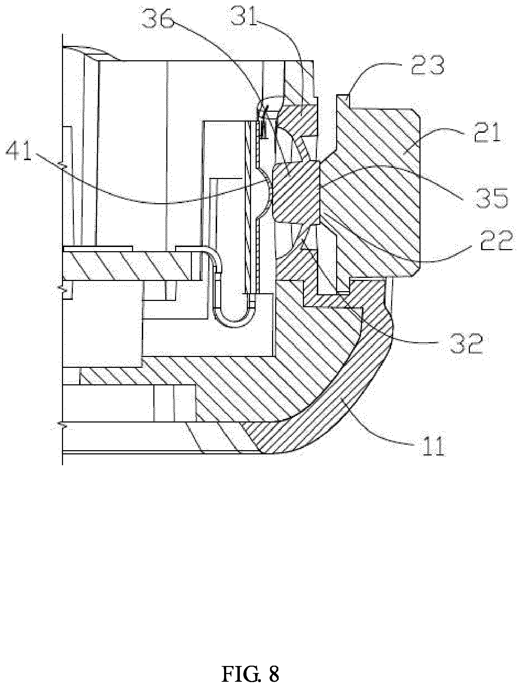

Referring to FIG. 3 and FIG. 6, a waterproof structure for a button of an outdoor waterproof mobile phone is shown. The waterproof structure includes a casing 1, a button 2, an elastic member 3, and a printed circuit board (PCB) assembly 4. The PCB assembly 4 is coupled to a button switch 41. The PCB assembly 4 is assembled in the casing 1. An outer surface of the casing 1 is provided with a soft rubber layer 11. The soft rubber layer 11 and the casing 1 are integrated. Referring to FIGs. 4-8, the material of the elastic member 3 and the material of the soft rubber layer 11 are the same, and the elastic member 3 and the soft rubber layer 11 are coupled to be a whole structure. The elastic member 3 and the soft rubber layer 11 are a whole structure and integrate with the casing 1. The elastic member 3 includes a tubular structure 31. The tubular structure 31 is provided with an elastic wall 32. The elastic wall 32 is an arch structure. The elastic wall 32 protrudes towards interior of the tubular structure 31. The elastic wall 32 includes an inner bottom surface 33 and an outer bottom surface 34. A center of the inner bottom surface 33 is further provided with a convex stage 35. The outer bottom surface 34 is further provided with a protrusion 36 corresponding to the convex stage 35. The protrusion 36 is opposite to the button switch 41. The protrusion 36 and the button switch 41 press against and contact each other. An outer sidewall of the tubular structure 31 is further provided with a sawtooth structure 39. Five sawteeth are taken as an example. The casing 1 is provided with sawtooth grooves 12 corresponding to the sawtooth structure 39. The elastic member 3 is tightly engaged with and integrated with the casing 1 via an engagement between the sawtooth structure 39 and the sawtooth grooves 12. The button 2 includes a keycap 21 and a resisting block 22. The keycap 21 at the edge is provided with a flange 23. The casing 1 is provided with a button engaging groove 13 corresponding to the flange 23. In a thickness direction of the flange 23, a width of the engaging groove 13 is greater than a thickness of the flange 23. Thus, the flange 23 is movably assembled in the engaging groove 13 to achieve a pressure movement and limitation of the button 2. Simultaneously, the resisting block 22 is opposite to the convex stage 35, and the resisting block 22 and the convex stage 35 contacts each other. When the button 2 is pressed, the resisting block 22 acts the pressure on the convex stage 35. At the moment, the elastic wall 32 is exerted to generate a stretch and deformation, and then is transmitted to the button switch 41 via the protrusion 36, thus the button switch 41 is conducted and the button 2 function is accordingly achieved.

In the aforementioned waterproof structure, the elastic wall 32 and the casing 1 are integrated, thus a waterproof reliability of the button 2 is ensured. Simultaneously, the arch height of the arch-shaped elastic wall 32 determines a stretch and deformation length of the elastic wall 32, namely, an elastic tip. The elastic wall 32 is an inner structure of the product. Thus the limitation of arch height design to the casing 1 is small and the arch height design can be flexibly adjusted according to the needed tip when the button switch 41 is conducted, thus a problem that the elastic tip is designed to the button 2, but the button 2 cannot be set a higher elastic tip because the button 2 is an appearance member. Simultaneously, a problem of a bad feel of the button 2 caused by a small elastic tip is resolved. Simultaneously, the button 2 is soled arranged, thus the color and the material of the button 2 can be flexibly designed according to the customer requirement and the product requirement. Moreover, the elastic member 3 and the hard rubber layer of the casing 1 employs a tooth-engagement manner. Simultaneously, the elastic member 3 and the soft rubber layer 11 are coupled to be a whole structure, causing the engagement between the elastic member 3 and the casing 1 to be tight, and the disengagement of the elastic member 3 from the casing 1 because of the repeated deformation of the elastic member 3 caused by the pressure of the button 2 again and again to be avoided. Thus, the reliability of the waterproofing of the button 2 and the effective conducted of the function is more ensured.

It will be appreciated that, the elastic member 3 can also be a sole structure and be coupled with the casing 1 to be a whole structure via a mutual engagement between the sawtooth structure 39 provided on the elastic member 3 and the sawtooth grooves 12 provided on the casing 1. Only that the coupled between the elastic member 3 and the structure needed to be coupled is tight can be ensured, other coupled manners can also be employed and the shapes of the sawteeth can be varied at will. Simultaneously, the elastic member 3 can be adapted to the double-color molded casing 1 with providing with a soft rubber layer 11. Only need to design the elastic member 3 and the soft rubber layer to be a whole structure, a button function and a reliable waterproofing can be better achieved. The detailed shape directed to the arch structure can be design to be a sphere-shaped arch surface, an arc-shaped arch surface, an arch-shaped arch surface, or an arch surface whose cross-section is trapezoid. Whichever the arch surface is, only if the elastic member 3 provides a preset elastic tip, and the function of the component acted by the elastic member 3 is achieved via the stretch and rebound of the arch surface, fall into the protection range of the disclosure.

The above is a detailed description with the accompanying drawings of a button waterproof structure with an arch structure elastic wall. However, the ideas of the present disclosure can develop to all kinds of button waterproof structure, and the application field can be develop to all outdoor electronic devices. Any situation, such as, the product need apply the button waterproof structure, improve the feel of the button on the base of the waterproofing, or improve the reliability of the button function, can use the ideas of the present disclosure to change and develop.

## Claims

1. A waterproof structure for a button comprising a casing (1), a button (2) movably coupled to the casing (1), and an elastic member (3), the waterproof structure being **characterizing by**:
the casing (1) providing a soft rubber layer (101) at an outer surface thereof and a hard rubber layer, the soft rubber layer (101) and the casing (1) are integrated;
the elastic member (3) arranged on the casing (1) and integrated with the casing (1), the elastic member (3) and the soft rubber layer (101) being a whole structure, and the elastic member (3) and the hard rubber layer of the casing (1) employing a tooth-engagement, the elastic member (3) being contacted by the button (2), the elastic member (3) comprising a tubular structure (31) and an elastic wall (32), the elastic wall (32) being arranged on the tubular structure (31), the elastic wall (32) being an arch structure, the elastic wall (32) protruding towards interior of the tubular structure (31).

2. The waterproof structure for a button as described in claim 1, wherein:
the arch structure comprises an inner bottom surface (33) and an outer bottom surface (34), a center of the inner bottom surface (33) is further provided with a convex stage (35), the outer bottom surface (34) is further provided with a protrusion (36) corresponding to a position of the convex stage (35).

3. The waterproof structure for a button as described in claim 2, wherein:
the button (2) comprises a keycap (21) and a resisting block (22), the resisting block (22) is assembled in the tubular structure (31) and contacts the convex stage (35).

4. The waterproof structure for a button as described in claim 1-3, wherein:
an outer sidewall of the tubular structure (31) is provided with a sawtooth structure (39), the number of the sawteeth is greater than two, the casing (1) is provided with a plurality of sawtooth grooves (12) corresponding to the sawtooth structure (39), the elastic member (3) is tightly engaged with and integrated with the casing (1) via an engagement between the sawtooth structure (39) and the sawtooth grooves (12).

5. The waterproof structure for a button as described in claim 1-4, wherein:
the soft rubber layer (101) and the elastic member (3) are made of the same material.

6. The waterproof structure for a button as described in claim 4, wherein:
the number of the sawteeth and the number of the sawteeth grooves (12) are respectively five, the sawteeth are evenly distributed on the flange edge of the elastic member (3) and are further positioned at the another area of the flange edge excluding the area coupled with the soft rubber layer (101).

7. The waterproof structure for a button as described in claim 3, wherein:
an outer edge of the keycap (21) is provided with a flange (23), the casing (1) is provided with a button engaging groove (13) corresponding to the flange (23), a width of the engaging groove (13) is greater than a thickness of the flange (23) at a direction of a thickness of the flange (23), therefore the button (2) is movably assembled in the engaging groove (13).

8. A waterproof mobile phone comprising a waterproof structure for a button as described in any of claims 1-7.

## Patentansprüche

1. Wasserdichte Struktur für einen Knopf, umfassend ein Gehäuse (1), einen Knopf (2), welcher bewegbar an dem Gehäuse (1) gekoppelt ist, und ein elastisches Element (3), wobei die wasserdichte Struktur **dadurch gekennzeichnet ist, dass**:
das Gehäuse (1) eine Weichgummischicht (101) an einer Außenfläche davon und eine Hartgummischicht bereitstellt, die Weichgummischicht (101) und das Gehäuse (1) integriert sind;
das elastische Element (3) auf dem Gehäuse (1) angeordnet und mit dem Gehäuse (1) integriert ist, wobei das elastische Element (3) und die Weichgummischicht (101) eine Gesamtstruktur sind, und das elastische Element (3) und die Hartgummischicht des Gehäuses (1) eine verzahntes Eingreifen verwenden, wobei das elastische Element (3) durch den Knopf (2) kontaktiert wird, wobei das elastische Element (3) eine röhrenförmige Struktur (31) und eine elastische Wand (32) umfasst, wobei die elastische Wand (32) auf der röhrenförmigen Struktur (31) angeordnet ist, wobei die elastische Wand (32) eine Bogenstruktur ist, wobei die elastische Wand (32) in Richtung des Inneren der röhrenförmigen Struktur (31) vorsteht.

2. Wasserdichte Struktur für einen Knopf nach Anspruch 1, wobei:
die Bogenstruktur eine innere untere Fläche (33) und eine äußere untere Fläche (34) umfasst, ein Zentrum der inneren unteren Fläche (33) weiter mit einer konvexen Stufe (35) versehen ist, die äußere untere Fläche (34) weiter mit einem Vorsprung (36) versehen ist, welcher einer Position der konvexen Stufe (35) entspricht.

3. Wasserdichte Struktur für einen Knopf nach Anspruch 2, wobei:
der Knopf (2) eine Tastenkappe (21) und einen Widerstandsblock (22) umfasst, der Widerstandsblock (22) in der röhrenförmigen Struktur (31) zusammengebaut ist und die konvexe Stufe (35) kontaktiert.

4. Wasserdichte Struktur für einen Knopf nach Anspruch 1-3, wobei:
eine äußere Seitenwand der röhrenförmigen Struktur (31) mit einer Sägezahnstruktur (39) versehen ist, die Zahl der Sägezähne größer als zwei ist, das Gehäuse (1) mit einer Vielzahl von Sägezahnnuten (12) versehen ist, welche der Sägezahnstruktur (39) entsprechen, das elastische Element (3) dicht in das Gehäuse (1) eingreift und mit diesem über einen Eingriff zwischen der Sägezahnstruktur (39) und den Sägezahnnuten (12) integriert ist.

5. Wasserdichte Struktur für einen Knopf nach Anspruch 1-4, wobei:
die Weichgummischicht (101) und das elastische Element (3) aus demselben Material hergestellt sind.

6. Wasserdichte Struktur für einen Knopf nach Anspruch 4, wobei:
die Zahl der Sägezähne und die Zahl der Sägezahnnuten (12) jeweils fünf ist, die Sägezähne gleichmäßig auf dem Flanschrand des elastischen Elements (3) verteilt sind und weiter an dem weiteren Bereich des Flanschrands angeordnet sind, wobei der Bereich ausgeschlossen ist, welcher mit der Weichgummischicht (101) gekoppelt ist.

7. Wasserdichte Struktur für einen Knopf nach Anspruch 3, wobei:
ein äußerer Rand der Tastenkappe (21) mit einem Flansch (23) versehen ist, das Gehäuse (1) mit einer knopfeingreifenden Nut (13) versehen ist, welche dem Flansch (23) entspricht, eine Breite des eingreifenden Flansches (13) größer ist als eine Dicke des Flansches (23) in einer Richtung einer Dicke des Flansches (23), aufgrund dessen der Knopf (2) bewegbar in der eingreifenden Nut (13) zusammengebaut ist.

8. Wasserdichtes Mobiltelefon, umfassend eine wasserdichte Struktur für einen Knopf nach einem der Ansprüche 1-7.

## Revendications

1. Structure étanche à l'eau pour un bouton comprenant un boîtier (1), un bouton (2) couplé de façon amovible au boîtier (1) et un élément élastique (3), la structure étanche étant **caractérisée par** :
le boîtier (1) fournissant une couche de caoutchouc mou (101) au niveau de sa surface extérieure et une couche de caoutchouc dur, la couche de caoutchouc mou (101) et le boîtier (1) étant intégrés ;
l'élément élastique (3) disposé sur le boîtier (1) et intégré au boîtier (1), l'élément élastique (3) et la couche de caoutchouc mou (101) constituant une structure globale, et l'élément élastique (3) et la couche en caoutchouc dur du boîtier (1) utilisant un engagement par denture, l'élément élastique (3) étant en contact avec le bouton (2), l'élément élastique (3) comprenant une structure tubulaire (31) et une paroi élastique (32), la paroi élastique (32) étant agencée sur la structure tubulaire (31), la paroi élastique (32) étant une structure en arc, la paroi élastique (32) faisant saillie vers l'intérieur de la structure tubulaire (31).

2. Structure étanche à l'eau pour un bouton selon la revendication 1, dans laquelle :
la structure en arc comprend une surface inférieure interne (33) et une surface inférieure externe (34), un centre de la surface inférieure interne (33) est en outre pourvu d'un plateau convexe (35), la surface inférieure externe (34) est en outre munie d'une saillie (36) correspondant à une position d'une plate-forme convexe (35).

3. Structure étanche à l'eau pour un bouton selon la revendication 2, dans laquelle :
le bouton (2) comprend un dessus de bouton (21) et un bloc résistant (22), le bloc résistant (22) est assemblé dans la structure tubulaire (31) et vient au contact de la plate-forme convexe (35).

4. Structure étanche à l'eau pour un bouton selon les revendications 1 à 3, dans laquelle :
une paroi latérale externe de la structure tubulaire (31) est munie d'une structure en dents de scie (39), le nombre de dents de scie est supérieur à deux, le boîtier (1) est muni d'une pluralité de rainures de dents de scie (12) correspondant à la structure en dents de scie (39), l'élément élastique (3) est étroitement en prise avec le boîtier (1) et intégré à celui-ci via une mise en prise entre la structure en dents de scie (39) et les rainures de dents de scie (12).

5. Structure étanche à l'eau pour un bouton selon la revendication 1 à 4, dans laquelle
la couche de caoutchouc mou (101) et l'élément élastique (3) sont constitués du même matériau.

6. Structure étanche à l'eau pour bouton selon la revendication 4, dans laquelle :
le nombre de dents de scie et le nombre de rainures de dents de scie (12) sont respectivement de cinq, les dents de scie sont réparties uniformément sur le bord en bride de l'élément élastique (3) et sont en outre positionnées au niveau d'une autre zone du bord en bride à l'exclusion de la zone couplée à la couche de caoutchouc souple (101).

7. Structure étanche à l'eau pour un bouton selon la revendication 3, dans laquelle :
un bord externe du dessus de bouton (21) est pourvu d'une bride (23), le boîtier (1) est pourvu d'une rainure de mise en prise de bouton (13) correspondant à la bride (23), une largeur de la rainure de mise en prise (13) est supérieure à l'épaisseur de la bride (23) dans le sens de l'épaisseur de la bride (23), de sorte que le bouton (2) est assemblé de manière amovible dans la rainure de mise en prise (13).

8. Téléphone mobile étanche à l'eau comprenant une structure étanche à l'eau pour un bouton tel que décrite dans l'une quelconque des revendications 1 à 7.
